# EUROPEAN PATENT APPLICATION

(11) **EP 4 790 876 A1**
(43) Date of publication of application: **12.08.2026**
(21) Application number: 26157592.2
(22) Date of filing: 10.02.2026
(51) Int. Cl.: H02K 1/22, H02K 3/02, H02K 21/46, H02K 17/20

(54) **ROTOR OF AN ELECTRIC SYNCHRONOUS MOTOR AND AN ELECTRIC SYNCHRONOUS MOTOR WITH PERMANENT MAGNETS**

(30) Priority: 10.02.2025 WO PCT/PL2025/451179
(71) Applicant: "KISIELEWSKI" SPOLKA Z OGRANICZONA ODPOWIEDZIALNOSCIA, 46-250 Wolczyn (PL)
(72) Inventor: Kisielewski, Piotr, Ligota Wolczynska (PL)
(74) Representative: Ptasinski, Konrad Witold

(57) **Abstract**

The present invention relates to a rotor (1) of an electric synchronous motor with permanent magnets, comprising: a substantially cylindrical rotor body (2) in which at least two receiving channels (3) are formed, in which at least two permanent magnets (4) are disposed, wherein the rotor body (2) has, in the region of the outer surface, a plurality of circumferentially disposed outer slots (5) in which outer bars (6) are inserted, and, in the region closer to the rotational axis of the substantially cylindrical rotor body (2), a plurality of circumferentially disposed inner slots (7) in which inner bars (8) are inserted, end rings (9) which electrically connect the outer bars (6) and/or the inner bars (8), forming an outer cage and an inner cage respectively, wherein the ratio of the electrical conductivity σₑₓₜ of the material of the outer bars (6) to the electrical conductivity σᵢₙₜ of the material of the inner bars (8) falls within the range of 0.17 to 0.35. The present invention also relates to an electric synchronous motor with permanent magnets comprising such a rotor.

## Description

The present invention relates to a rotor of an electric synchronous motor and an electric synchronous motor with permanent magnets. The objects of the invention find application in a wide range of applications, from industrial drives and transportation systems, through automotive applications, to power supply systems and household appliances.

Electric synchronous motors with permanent magnets base their operating principle on the constant magnetic field generated by permanent magnets placed in the rotor. In contrast to traditional induction motors, the electric motors in question eliminate the need for additional windings on the rotor, which contributes to a reduction of energy losses and an improvement of dynamic parameters. The motor construction comprises a stator equipped with windings which, upon being supplied with alternating current, generate a rotating magnetic field, and a rotor with permanent magnets which, under the influence of this field, develop a torque.

The construction of electric synchronous motors with permanent magnets enables a range of advantageous properties to be achieved, such as high energy efficiency, high power density and a compact construction, which translates into savings in space and materials. Additionally, these motors are characterised by stable operation over a wide range of speeds and loads, and owing to precise control they may be used in applications requiring high accuracy, such as robotics or drives for precision machinery.

Electric synchronous motors with permanent magnets exist in various constructional variants, including variants with rotors of cage construction. In this type of solution, the rotor is equipped with an induction cage structure. Such a solution enables not only the optimisation of eddy current distribution, but also facilitates better heat dissipation, which is advantageous under elevated temperature operating conditions or under dynamic loads. The cage construction of the rotor also contributes to an increase in the mechanical robustness of the device, which is important in applications requiring high reliability and durability. A particular variant of the electric synchronous motor with a rotor of cage construction is the double-cage electric synchronous motor. This concept consists in placing two separate sets of cages - an inner and an outer one - which allows for more effective management of eddy current flow within the rotor. The double cage contributes to achieving higher energy efficiency, reduction of power losses and improvement of dynamic parameters, including starting torque and response to variable load conditions. This solution is particularly advantageous in applications where rapid response to load changes and precise torque control are required, such as in drive systems in industry, transportation or robotics.

Polish patent PL237512B1 discloses a line-start permanent magnet synchronous motor having a stator core composed of identically punched electrical steel laminations in the shape of a ring with technological cut-outs, with semi-closed slots evenly distributed on the circumference of the core, in which a stator winding is placed. The permanent magnet synchronous motor additionally comprises a rotor core composed of identically punched electrical steel laminations, with slot openings in which a rotor cage is placed and with punched openings in which permanent magnets in a U-configuration are mounted. In the electrical steel laminations of the rotor core, there are four tangential cut-outs constituting sockets for tangential permanent magnets and four radial cut-outs constituting sockets for radial permanent magnets. The U-shaped arrangement for 4 poles is formed by four identical permanent magnets placed in four tangential cut-outs of the rotor and polarised perpendicularly to the longitudinal axis of the cut-out, and four identical permanent magnets placed in radial cut-outs and polarised in the direction perpendicular to their longitudinal axis, forming four magnetic poles corresponding to the rotating field of the stator. Furthermore, in the electrical steel laminations there are numerous identical closed circular slots evenly distributed on the circumference of the rotor electrical steel lamination, in which, after the laminations have been assembled and the core formed, a cage winding of the rotor cast from aluminium is placed.

Polish patent PL207450B1 discloses a two-speed permanent magnet synchronous motor which has placed in the stator slots a switchable three-phase winding generating alternately a magnetic field with different numbers of poles, while in the rotor, on each pole pitch, permanent magnets are arranged in pairs which, in cross-sectional view, resemble the letter V with an opening equal to the pole pitch of the smaller number of poles. On the circumference of the rotor, on each pole pitch, smaller slots and larger slots are made, wherein the width of the larger slots equals 1/3 of the pole pitch, and the larger slots are located symmetrically on the axis of the pair of permanent magnets. The smaller and larger rotor slots are filled with an electrically conductive material and are connected at both ends of the rotor, forming a cage starting winding.

Chinese utility model CN202004611U discloses a cage-construction rotor for a self-starting permanent magnet synchronous motor. The said rotor comprises an iron core, cage conducting bars, permanent magnets and a shaft. The iron core is equipped with V-shaped grooves, wherein two permanent magnets are disposed in each V-shaped groove, forming a magnetic pole. The rotor is additionally equipped with a second cage, formed from additional conducting bars which are disposed between the rotor shaft and the cage conducting bars. The cage conducting bars and the additional conducting bars are respectively connected by end rings, thereby forming a first cage and an additional cage of the rotor. The cited rotor allows for an improvement of the starting parameters of the self-starting permanent magnet synchronous motor, and also dampens sudden changes in magnetic flux density in the permanent magnets, thereby improving the reliability and operating efficiency of the motor.

Polish patent PL239111B1 discloses a rotor of a permanent magnet synchronous motor with a double-cage winding, of cage motor construction composed of circular shaped elements in which slots accommodating conducting bars and keyways accommodating permanent magnets are punched. On each pole pitch, symmetrically with respect to the vertical axis, along the circumference, outer slots of circular cross-section are made, the cylindrical surface of which is substantially tangent to the cylindrical surface of the rotor. The outer slots are open to the cylindrical surface of the rotor through an outer air gap. Additionally, along the radii constituting the axes of symmetry of the outer slots, the rotor has inner slots of rectangular cross-section corresponding to the outer slots. Furthermore, at the edge of each pole pitch, on both sides, the outer and inner slots are connected by an inner air gap. Below the inner slots, permanent magnet slots are placed, wherein for each pole pitch the permanent magnet slots are formed by four rectangular channels forming a W-shape.

The technical problem of the present invention is to provide such a rotor of an electric synchronous motor with permanent magnets that will be dedicated to electric synchronous motors with line start, while at the same time ensuring a reduction of power losses, an improvement of dynamic parameters and an increase in the reliability of the electric synchronous motor. Furthermore, it is desired that the rotor of the electric synchronous motor constitutes a reliable construction characterised by increased mechanical strength, in particular with respect to inertial loads resulting from its rotational motion, taking into account also its components. It is also desired to provide a rotor of an electric synchronous motor that will have increased strength in terms of electrical and thermal parameters, while at the same time providing an increased starting torque of the electric synchronous motor.

The technical problem of the present invention also encompasses providing such an electric synchronous motor with permanent magnets having the characteristics presented above, in which an optimisation of the process of converting electrical energy into mechanical energy is achieved.

According to a first aspect of the invention, there is provided a rotor of an electric synchronous motor with permanent magnets, comprising: a substantially cylindrical rotor body in which at least two receiving channels are formed, in which at least two permanent magnets are disposed, wherein the rotor body has, in the region of the outer surface, a plurality of circumferentially disposed outer slots in which outer bars are inserted, and, in the region closer to the rotational axis of the substantially cylindrical body, a plurality of circumferentially disposed inner slots in which inner bars are inserted, end rings which electrically connect the outer bars and/or the inner bars, forming an outer cage and an inner cage respectively, characterized in that the ratio of the electrical conductivity σₑₓₜ of the material of the outer bars to the electrical conductivity σᵢₙₜ of the material of the inner bars falls within the range of 0.17 to 0.35.

Preferably, the rotor body is formed from a plurality of rotor body laminations assembled together to form a stack comprising a lamination stack of rotor body laminations.

Preferably, the rotor body lamination is formed from segments constituting an annular sector, preferably having an angle corresponding to the pole pitch or a multiple thereof.

Preferably, the receiving channel is formed from at least two segments and assumes an expanded structure.

Preferably, the receiving channel is formed from four segments and assumes a W-shaped structure, with one permanent magnet being placed in each segment.

Preferably, the outer segments of the receiving channel extend substantially in the radial direction, and their outer ends are located in the region adjacent to the inner slots at the extreme positions for the given pole pitch.

Preferably, the receiving channels for adjacent poles have different opening angles between adjacent segments forming the receiving channels.

Preferably, adjacent poles have a different number of outer slots and/or inner slots, preferably differing by one, two or three.

Preferably, the receiving channel in the region of connection of the middle segments has abutment surfaces formed, perpendicular to the longitudinal direction of the corresponding permanent magnet, preferably having a length greater than ¼ of the length of the shorter side of the permanent magnet.

Preferably, at least the extreme outer slots and inner slots for each pole pitch are connected to each other by means of a slot channel.

Preferably, all outer slots and inner slots for each pole pitch are connected to each other by means of a slot channel, wherein the width of the slot channel at the extreme positions of each pole pitch is greater than the width of the slot channels at the remaining positions.

Preferably, the width of the slot channel is substantially equal to the dimension corresponding to the width of the inner slot, wherein at least one locking projection is located in the region of connection of the slot channel with the inner slot.

Preferably, the outer slots are open to the outer surface of the rotor body by means of an outer opening, wherein the outer opening has a width smaller than the width dimension of the outer slot.

Preferably, the outer slots have a substantially circular shape and the outer bars constitute substantially cylinders.

Preferably, the inner slots have a substantially rectangular shape and the inner bars constitute substantially cuboids.

Preferably, the rotor body is connected to the shaft by means of a form-fit connection.

Preferably, each rotor body lamination comprises at least one guide hole, wherein the lamination stack of rotor body laminations is connected to each other by a fastening pin introduced into the guide holes.

Preferably, the outer bars and/or the inner bars are made from a group of materials comprising copper and its alloys, brass, bronze, with various additions comprising zinc, lead, aluminium, nickel, iron, silicon, tin, beryllium.

According to a second aspect of the invention, there is provided an electric synchronous motor with permanent magnets comprising a housing in which a stator is placed, inside which a rotor is placed in a manner ensuring free rotational movement about its axis, wherein the stator has, on its inner circumference, a plurality of stator slots open to the inner surface of the stator, in which a stator winding is placed, characterized in that the rotor is a rotor as defined in the first aspect of the invention.

Preferably, the stator is formed from a plurality of stator laminations assembled together to form a stack comprising a lamination stack of stator laminations.

Preferably, the stator lamination is formed from segments constituting an annular sector.

Preferably, the stator winding is secured from the open end of the stator slots by locking elements.

Preferably, the ratio of the rotor slot pitch to the stator slot pitch falls within the range of 0.7 to 1.3.

The rotor of an electric synchronous motor with permanent magnets according to the present invention is dedicated to electric synchronous motors with line start, but may also be used for operation with an inverter, which makes it a universal construction. By using a double-cage construction made of materials characterised by an electrical conductivity ratio in the range of 0.17 to 0.35, a reduction of power losses and an improvement of dynamic parameters have been achieved. Both benefits can be associated, among other things, with the starting phase of the rotor, where in the initial phase of starting the outer cage operates, which is made of a material with lower electrical conductivity, whereby it is possible to generate the desired starting torque. The high resistance of this cage, in combination with the skin effect, causes an effective reduction of the starting current value of the stator, which contributes to an increase in the strength of the motor in terms of electrical and thermal parameters. As the rotational speed increases, the frequency of the currents flowing in the cage bars of the rotor decreases and the skin effect becomes less and less significant. Consequently, an increasing electric current begins to flow through the inner cage made of a material with better conductivity. This results in a highly desirable increase in torque during synchronisation.

The use of abutment surfaces in the region of connection of the inner segments of the receiving channel allows for a reduction in the risk of chipping of the sensitive permanent magnets in the corner areas, thereby increasing the strength and reliability of the resulting electric synchronous motor with permanent magnets according to the present invention. In turn, the increase in the width of the slot channel, particularly at the extreme positions of the outer and inner slots within a given pole pitch, allowed for an additional improvement of the magnetic parameters of the rotor, and thereby an improvement of the motor efficiency. On the other hand, the use of receiving channels of a convergent shape, but with a modified geometry in terms of the angles between individual segments for adjacent pole pitches, allowed for the creation of an asymmetric pole distribution, which is associated with a reduction in the value of parasitic alternating torques that hinder the starting of the motor and constitute a threat to the mechanical system of the motor due to high mechanical stresses.

The solution according to the present invention has been shown in the embodiments below and illustrated in the drawing, in which
Fig. 1 is a side cross-sectional view of the first embodiment of the electric synchronous motor with permanent magnets according to the present invention,
Fig. 2 is a front cross-sectional view of the electric synchronous motor with permanent magnets from Fig. 1,
Fig. 3 is a front view of a segment of the rotor body for the electric synchronous motor with permanent magnets from Fig. 1,
Fig. 4 is a front view of a rotor body lamination for the electric synchronous motor with permanent magnets according to the second embodiment of the invention,
Fig. 5 is a front cross-sectional view of the third embodiment of the electric synchronous motor with permanent magnets according to the present invention,
Fig. 6 is a front view of a stator segment and a rotor segment according to the third embodiment of the invention,
Fig. 7 is an enlargement of detail A of the rotor segment from Fig. 6, and
Fig. 8 is an enlargement of detail B of the rotor segment from Fig. 6.

### Example 1

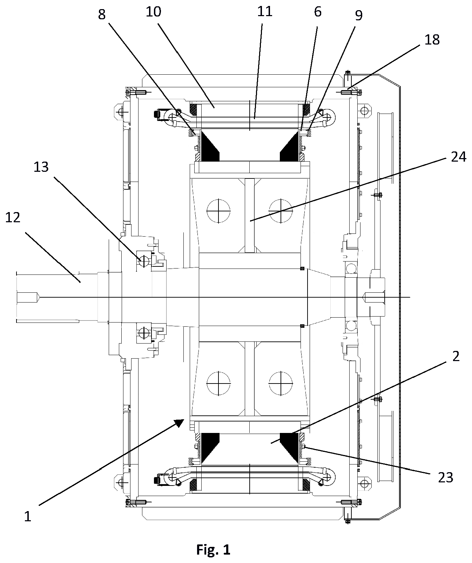

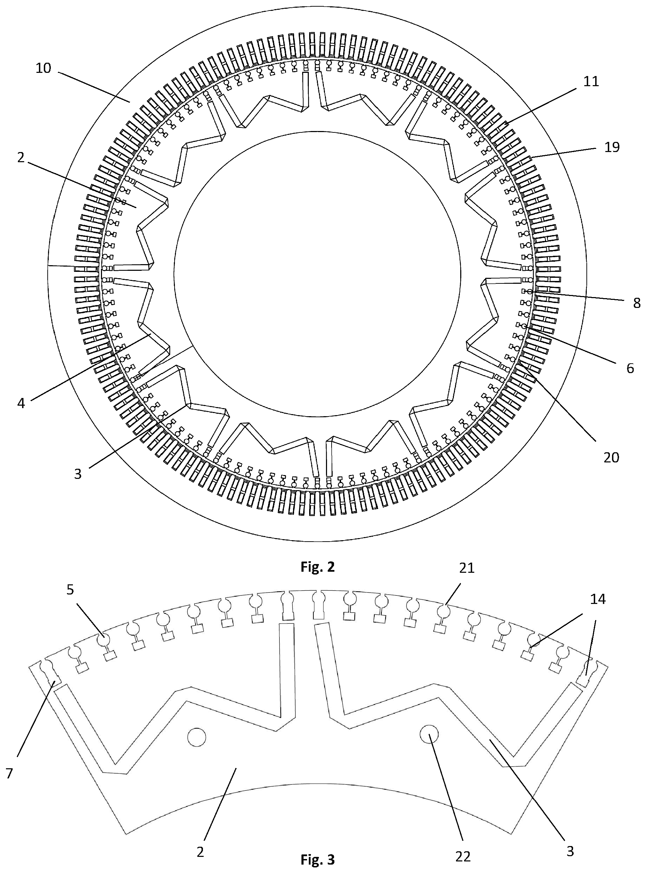

The first embodiment of the electric synchronous motor with permanent magnets according to the present invention is illustrated in a side cross-sectional view in Fig. 1 and in a front cross-sectional view in Fig. 2.

The electric synchronous motor with permanent magnets constituting the first embodiment of the invention is a line-start synchronous motor and is dedicated to drives for industrial devices such as belt conveyors, fans, compressors and ball mills.

In general, the electric synchronous motor with permanent magnets shown in Fig. 1 comprises a motor housing 18 in which the motor components are placed and which has in its front wall an opening through which the end of the shaft 12 is led out. Although Fig. 1 shows that the motor has a motor housing 18 formed from a plurality of interconnected constituent elements, it is also possible to use a motor housing 18 with a smaller or larger number of constituent elements of a closed or (partially) open construction. In general, the motor housing 18 directly accommodates and supports the stator 10, the rotor 1, which comprises, among other elements, the shaft 12. The rotor 1 is coupled or connected to the shaft 12, which extends axially through the motor housing 18 and protrudes beyond the area of the motor housing 18 with its (at least) one end. Mounted in the motor housing 18 are two bearings 13, located in the region of both ends of the motor housing 18 and supporting the shaft 12, ensuring its ability to perform free rotational movement about its axis. The number and type of bearings used do not constitute a limitation of the scope of the present invention, and the detailed construction in this respect depends on the application of the electric synchronous motor with permanent magnets according to the present invention and is known to persons skilled in the art, and therefore will not be described in more detail for the sake of clarity of the present disclosure.

In the present embodiment, the stator 10 is placed inside the motor housing 18 in a stable and stationary manner. Upon excitation (electrical energisation) of the motor, the rotor 1 interacts magnetically with the stator 10, causing it to rotate about the axis of symmetry. The rotor 1 shown in Fig. 1 comprises a rotor body 2, which is made from a plurality of laminations assembled together in the form of a stack and stably connected to each other forming a compact stack construction. The stator 10 is made in a similar technology, i.e. it is formed from a plurality of stator laminations assembled together in the form of a stack and stably connected to each other in a lamination stack. A single rotor body 2 lamination according to the present embodiment is shown in a front cross-sectional view in Fig. 2. Due to the considerable diameter of the electric synchronous motor with permanent magnets, which is dictated by the desired operating parameters such as power and torque, the rotor body 2 laminations, as well as the stator 10 laminations, have been divided into segments, wherein each segment constitutes an annular sector of a fixed selected angle, thereby forming repeatable elements which, when assembled together, define the entire annular stator 10 and/or rotor body 2 lamination. In a preferred embodiment of the invention, the rotor body 2 lamination may be divided into segments constituting an annular sector having an angle corresponding to the pole pitch or a multiple thereof, determined on the basis of the relationship: 360°/number of poles. In other words, the pole pitch defines the angular distance between adjacent poles. The electric synchronous motor with permanent magnets presented in the present embodiment of the invention constitutes a twelve-pole motor, i.e. forming twelve magnetic poles around the rotor 1, and therefore the pole pitch is 30°. Consequently, the segment of the rotor body 2 lamination shown in a front view in Fig. 3 constitutes an annular sector of 60°, since each segment covers two poles, and therefore an angular length corresponding to two pole pitches. Consequently, six such segments form a single rotor body 2 lamination. The stator 10 laminations are formed, analogously i.e. each stator 10 lamination forming a stack is divided into segments of a selected angle, the multiple of which constitutes 360°. In the present embodiment, the stator 10 laminations have been divided into segments constituting annular sectors of 45°, and therefore eight segments assembled together form a complete single stator 10 lamination. The division of individual rotor body 2 laminations and stator 10 laminations into segments, in particular corresponding to the pole pitch or a multiple thereof, is associated with a significant facilitation of the manufacturing process, where instead of performing punching operations on individual shaped components across the entire rotor body 2 or stator 10 lamination, which would require the use of highly specialised machining tools with significantly increased machining areas (due to the large external dimensions of the laminations), it is possible to use less complex machinery, since machining operations such as hole punching, and forming of sockets and cut-outs are carried out on lamination segments of relatively small surface area and external dimensions. Furthermore, the use of lamination segments for building the components of the electric synchronous motor with permanent magnets according to the present invention allows economic benefits to be achieved in the logistics and storage process due to the smaller dimensions of individual components, enabling better packing and more optimal use of cargo space. Additionally, the cutting of lamination segments constituting annular sectors is associated with a smaller amount of waste material, due to more optimal use of the surface of the source sheet from which the segments are punched.

It should be emphasised, however, that the number of poles of the rotor 1 and of the motor comprising such a rotor 1 is not limited to twelve, and in alternative embodiments it is possible to use a smaller or greater number of poles, provided that their even character is maintained and the number is greater than two, which will be presented in the subsequent embodiments.

Returning to the current embodiment of the electric synchronous motor with permanent magnets according to the invention, in Fig. 2 the construction of a single rotor body 2 lamination and stator 10 is shown in a front view, wherein each lamination is formed by assembling six segments constituting an annular sector of an angle corresponding to twice the pole pitch. The stator 10 lamination has, formed on its inner circumference, a plurality of rectangular stator slots 19 at equal angular spacing, wherein each stator slot 19 is open to the inner surface. In the present embodiment of the invention, the stator 10 lamination has one hundred and forty-four stator slots 19, however, it should be emphasised that the number of stator slots 19, as well as the slots formed in the rotor body 2, is not limited to that presented in the present embodiment and is dictated by design considerations to ensure the desired operating conditions of the designed electric synchronous motor with permanent magnets. A person skilled in the art to whom the present description of the invention is addressed will be aware of the method of determining the slot pitch, and therefore this issue will not be addressed in more detail.

As best illustrated in Fig. 2, a stator winding 11 is placed in the stator slots 19, which is additionally secured from the open end of the stator slots 19 by locking elements 20 inserted into receiving sockets formed in the edge region. The locking elements 20 additionally protect the stator winding 11 from damage and maintain the stator winding 11 in the desired position, preventing it from sliding out of the stator slot 19.

As mentioned above, the rotor 1 comprises a rotor body 2, which is also formed from a plurality of rotor body 2 laminations assembled in a stack, wherein each rotor body 2 lamination is formed in the present embodiment from six segments illustrated in Fig. 3. It is worth adding that the rotor body 2 laminations, as well as the stator 10 laminations, are made from materials commonly used in the construction of electric motor components, such as ferromagnetic electrical steel laminations, including silicon steel or electrotechnical steel. Typically, the thickness of the rotor body 2 laminations and the stator 10 laminations forming the stacks falls within the range of 0.3 mm to several mm, depending on the desired operating parameters as well as the operating point of the motor itself.

As best illustrated in Fig. 3, the rotor body 2 has, in the region of the outer surface, a plurality of circumferentially disposed outer slots 5. In the present embodiment, the outer slots 5 assume a substantially circular shape and are approximately tangent to the outer circumference of the rotor body 2 lamination. Furthermore, the outer slots 5 are open to the outer surface of the rotor body 2, wherein the outer opening 21 has a width smaller than the width dimension of the outer slot 5, i.e. the diameter of the outer slot 5 in the embodiment of the invention shown in Figs. 2 and 3. Outer bars 6 are inserted into the outer slots 5 of the rotor body 2, extending throughout the entire length dimension of the rotor body 2 and protruding from it on both sides, as best shown in Fig. 1. In the presented embodiment of the invention, the outer bars 6 have a cylindrical shape and are adapted to the geometry of the outer slots 5, into which they are introduced with a clearance fit. The use of an outer opening 21 with a width dimension smaller than the diameter of the outer slot 5, and thus the diameter of the outer bar 6, ensures that the outer bar 6 is retained in the area of the rotor body 2 even at high rotational speeds of the rotor 1 and at significant centrifugal force. Leaving the outer slots 5 open to the outer surface of the rotor body 2 is in turn important for achieving appropriate leakage reactance, and at the same time provides access for tools used for expanding the outer bars 6 after they have been inserted into the outer slots 5.

In the present embodiment, the electric synchronous motor with permanent magnets has been designed so that the circumference of the rotor body 2 contains one hundred and fourteen outer slots 5 disposed at equal angular spacing. The number of outer slots 5 is dictated by design requirements for achieving the desired operating parameters, and the said design issues are known to persons skilled in the art. In the present embodiment, the ratio of the rotor 1 slot pitch to the stator 10 slot pitch is approx. 0.792 (the slot pitch ratio constitutes the ratio of the number of outer slots 5 in the rotor 1 to the number of stator slots 19 in the stator). It should be emphasised that the number of slots in the rotor 1 and the stator 10, as well as the ratio of the rotor 1 slot pitch to the stator 10 slot pitch, are not limited to the values presented in the present embodiment and are correlated with the operating requirements in terms of the working parameters of each designed electric synchronous motor with permanent magnets. In alternative embodiments, it is possible to use a smaller or greater number of slots in the rotor 1 and the stator 10, and a slot pitch ratio of the rotor 1 to the stator 10 of a different value, for example in the range of 0.7 to 1.3.

Consequently, the rotor 1 of the electric synchronous motor with permanent magnets according to the present embodiment comprises a rotor body 2 comprising a plurality of outer slots 5 in which outer bars 6 are inserted. Additionally, the rotor 1 comprises end rings 9 which electrically connect the outer bars 6, thereby forming the outer cage of the rotor 1.

In turn, in the region closer to the rotational axis of the substantially cylindrical rotor body 2, a plurality of inner slots 7 are circumferentially disposed, which in the present embodiment assume a rectangular shape. It is worth noting that the number of inner slots 7 corresponds to the number of outer slots 5, and therefore in the present embodiment there are one hundred and fourteen inner slots 7 disposed at equal angular spacing. The inner slots 7 are disposed at a small distance from the outer slots 5 and share a common axis extending through the centre of the circle circumscribing the rotor body 2 lamination. Inner bars 8 are inserted into the inner slots 7, which similarly have a cuboidal shape with a rectangular cross-section substantially corresponding to the rectangular inner slot 7. The inner bars 8 are inserted with a clearance fit into the inner slots 7 of the entire lamination stack of the rotor body 2 such that they protrude from the rotor body 2 at both its ends, as illustrated in Fig. 1. The inner bars 8 are connected at the end regions by means of end rings 9, which close the electric circuit and thereby form the inner cage. In the present embodiment, the end rings 9 are common to the outer cage and the inner cage, however, in alternative embodiments the outer cage and the inner cage may have individual end rings 9. A rotor 1 having two cages, i.e. an outer cage and an inner cage, is referred to in the field as a double-cage rotor 1.

It is worth emphasising that, despite the fact that the embodiment of the invention presents a rotor 1 of double-cage construction, where the outer cage is formed from cylindrical outer bars 6 and the inner cage is formed from cuboidal inner bars 8, the present invention is not limited to the presented shapes of bars 6, 8 and their corresponding slots 5, 7, and in alternative embodiments it is possible to use bars of a different geometry for the construction of both cages, provided that the desired electrical and magnetic properties are ensured while maintaining adequate resistance to mechanical, electrical and thermal overloads.

Importantly, the outer bars 6 forming the outer cage are made of beryllium copper bronze (for example CuBe2) having an electrical conductivity σₑₓₜ of 20 MS/m, while the inner bars 8 forming the inner cage are made of copper having an electrical conductivity σᵢₙₜ of 58 MS/m. Consequently, the ratio of the electrical conductivity σ of the material of the outer bars 6 to the conductivity of the material of the inner bars 8 is approx. 0.345. It should be emphasised, however, that in alternative embodiments it is possible to use different materials from those presented in the present embodiment for the construction of the outer and inner cage, provided that an electrical conductivity σ ratio in the range of 0.17 to 0.35 is ensured. A non-limiting group of materials used for the construction of the inner cage and the outer cage satisfying the above-specified electrical conductivity σ ratio value comprises materials that are relatively easy to solder, such as: various grades of copper and its alloys, including brass and bronze, with various additions such as: zinc, lead, aluminium, nickel, iron, silicon, tin, beryllium.

Maintaining the above-indicated material condition for the components forming the outer cage and the inner cage of the rotor 1 is important for ensuring the correct starting of the electric synchronous motor with permanent magnets according to the present invention. During starting, in the rotor 1 of the electric synchronous motor with permanent magnets, voltages are induced in both its outer and inner cages, which cause current to flow in the outer bars 6 and inner bars 8 of the cage and in the end rings 9, respectively. In the initial phase of starting, the outer cage operates. This is associated with the skin effect. In the outer cage made of a material with lower electrical conductivity σₑₓₜ, an electric current flows which enables the generation of starting torque. The high resistance of the outer cage in combination with the skin effect causes an effective reduction of the starting current value of the stator 10, since in the system of a stationary rotor 1 the system behaves analogously to the operation of a transformer. As the speed increases, the frequency of the currents flowing in the bars 6, 8 of the rotor 1 cage decreases and the skin effect becomes less and less significant. Consequently, an increasing electric current begins to flow through the inner cage made of a material with better conductivity. This causes a highly desirable increase in torque during synchronisation. It should be emphasised that achieving high resistances of the outer cage by reducing the cross-section of the outer bars 6 forming it will lead to excessive heating of the outer cage due to the high current densities flowing therein.

The rotor 1 shown in Fig. 2 comprises a rotor body 2 in which receiving channels 3 are formed, in which permanent magnets 4 are disposed, wherein in the present embodiment there is one receiving channel 3 per pole pitch, i.e. per every 30°, and therefore twelve receiving channels 3 are formed in the rotor body 2, extending through the entire rotor body 2 in the axial direction and forming through openings. In the embodiment of the invention shown in Fig. 3, the receiving channels 3 have an expanded structure, formed by four channel segments forming a W-shape. It should be emphasised, however, that the shape of the receiving channels 3 is not limited to that presented in the present embodiment, and in alternative embodiments it is possible to use different geometries, such as without limitation a V-shape, a U-shape, arc shapes or a rectangular shape. The expansion of the shape of the receiving channel 3, in particular to the four-segment W-shape, is however advantageous, since an increased specific (magnetic) surface area of the permanent magnets 4 is achieved.

As can be observed in Fig. 3, the outer segments (arms) of the receiving channel 3 extend approximately in the radial direction and are directed with their outer end towards the inner slots 7 disposed at the extreme positions within a single pole pitch, wherein the ends of these segments are located at a small distance from the said inner slots 7. This geometry allows for a reduction of magnetic losses in the said region of the rotor body 2.

The middle segments of the receiving channel 3 converge at an angle to each other, thereby forming the inner arms of the letter W. Cuboidal permanent magnets 4 made of NdFeB - neodymium-iron-boron, are placed in the four segments of each receiving channel 3. It should be emphasised, however, that the material from which the permanent magnets 4 are made is not limited to that presented in the present embodiment, and in alternative embodiments the permanent magnets 4 may be made of other materials, provided that adequate magnetic force and magnetic field line path are ensured. The shape of the permanent magnets 4 is also not limited to the cuboidal shape presented in the present embodiment, and in alternative embodiments may assume a different shape, adapted to the shape of the receiving channel 3 or its segments, while maintaining stable and secure mounting of the permanent magnets 4 in the rotor body 2 without the possibility of their displacement. Due to the fact that permanent magnets 4 are usually made of materials characterised by high brittleness, the mutual dimensioning of the shape of the receiving channels 3 and the shape of the permanent magnets 4 is extremely important for ensuring the reliability of the device and reducing the risk of damage during operation of the electric synchronous motor with permanent magnets according to the present invention.

One permanent magnet 4 is therefore placed in each segment of the receiving channel 3, wherein each permanent magnet 4 in the common receiving channel 3 faces in the same polar direction, i.e. in the W-shaped receiving channel 3 the same poles of the permanent magnets 4 face each other, such that the resulting magnetic flux is directed along the radial direction (i.e. the same poles of each permanent magnet 4 face outwards). In adjacent receiving channels 3, on the other hand, the permanent magnets 4 are placed in the opposite polar direction, which ultimately creates a rotor 1 of the electric synchronous motor with permanent magnets of alternating polarity with twelve alternately placed poles.

It is also worth noting that in the presented preferred embodiment of the invention, in the rotor body 2, adjacent receiving channels 3 have a slightly different geometry in order to create asymmetric poles on the circumference of the rotor 1. Such a construction is significant for reducing the value of parasitic alternating torques that hinder the starting of the motor and constitute a threat to the mechanical system of the motor due to high mechanical stresses.

The different geometry of adjacent receiving channels 3 is realised by a different opening angle between the middle segments of the receiving channel 3 and/or a different opening angle between the middle and outer segments of the receiving channel 3. As can be observed in Fig. 3, the left receiving channel 3 has a smaller opening angle between the segments forming the receiving channel 3 than the opening angle occurring between the segments forming the right receiving channel 3. As a result, in the pole pitch between the outer segments of the receiving channel 3 for the narrower letter W, nine outer slots 5 and nine inner slots 7 are disposed in the circumferential area of the rotor body 2 lamination, whereas in the pole pitch between the outer segments of the receiving channel 3 for the wider letter W, ten outer slots 5 and ten inner slots 7 are disposed in the circumferential area of the rotor body 2 lamination. This construction is repeated in an alternating arrangement across the entire circumference of the rotor 1 according to the present invention.

As shown in Fig. 3, all outer slots 5 are connected to the inner slots 7 by means of a slot channel 14, wherein at the extreme positions for each pole pitch the slot channels 14 are wider than the remaining ones, with a width slightly smaller than the width of the inner slot 7 and the diameter of the outer slot 5. Ensuring that the width of the slot channel 14 is smaller than the width of the inner slot 7 allows the inner bar 8 to be stably and securely retained in the corresponding inner slot 7, even at high centrifugal forces arising during rotational movement of the rotor 1. It should be noted that the formation of slot channels 14 connecting the outer slots 5 with the inner slots 7 aims to achieve appropriate leakage reactance of the bars 6, 8 of the respective outer and inner cages. In turn, providing a significantly wider slot channel 14 for connecting the extreme outer slots 5 and inner slots 7 allows for a reduction of the magnetic flux loss of the extreme permanent magnets 4.

Additionally, as best illustrated in Fig. 3, below the middle segments of the receiving channel 3 there are guide holes 22, which facilitate the assembly of the rotor body 2 laminations together to form a stack comprising a stack of such laminations, by inserting appropriately dimensioned fastening pins 23 into the guide holes 22.

The rotor body 2 thus formed is mounted on the shaft 12, wherein, due to the considerably larger inner diameter of the ring forming the rotor body 2 compared to the diameter of the shaft 12, it is mounted to the shaft 12 by means of a ribbed support structure 24. Due to the significant torques being transmitted, the mounting of the rotor body 2 to the shaft 12 or the support structure 24 is typically realised using a form-fit connection (not shown).

### Example 2

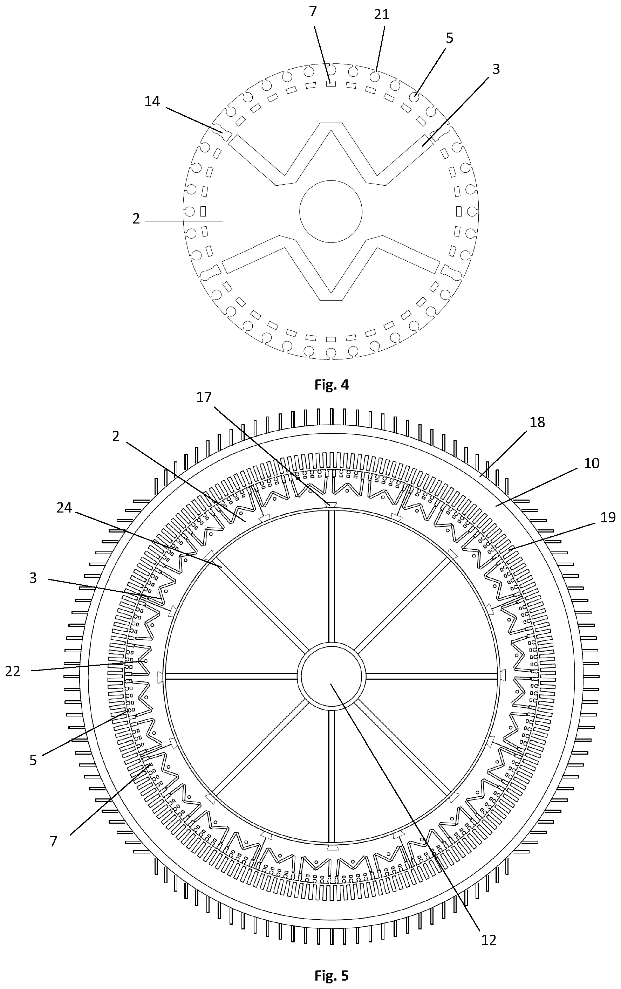

The second embodiment of the rotor 1 and of the electric synchronous motor with permanent magnets comprising such a rotor 1 is illustrated in a front cross-sectional view in Fig. 4, which illustrates only the rotor body 2 lamination.

The rotor 1 and the electric synchronous motor with permanent magnets comprising it has a construction similar to the construction of the rotor 1 and the electric synchronous motor with permanent magnets presented in the first embodiment, and therefore similar constituent elements will not be described again for the sake of clarity of the present disclosure.

Unlike in the first embodiment, in the second embodiment the rotor body 2 lamination constitutes a monolithic element, not divided into segments, due to the small external dimension of the rotor 1 as well as of the electric synchronous motor with permanent magnets itself. The relatively small external dimension of the rotor 1 and the motor is associated with the lower motor power and its construction comprising two poles instead of twelve poles presented in the first embodiment of the invention. As a result, the external dimensions of the laminations forming the rotor body 2 are considerably smaller and can thus be machined with standard metal machining equipment, without the need for division into segments.

Additionally, unlike in the first embodiment of the invention, the rotor body 2 lamination shown in Fig. 4 comprises two pole pitches of 180°, and the receiving channels 3 at each pole pitch assume a W-shape, wherein for each of the poles the angles between the individual segments of the receiving channels 3 are different. As a result, between the outer segments of the receiving channel 3 for the first pole (upper in Fig. 2) there are eleven outer slots 5 and inner slots 7, while between the outer segments of the receiving channel 3 for the second pole (lower in Fig. 2) there are thirteen outer slots 5 and inner slots 7. Similarly, such a construction allows for a reduction of the value of parasitic alternating torques that hinder the starting of the motor. Furthermore, the only outer slots 5 connected to the inner slots 7 by means of a slot channel 14 occur at the positions where the end areas of the outer segments forming the receiving channels 3 are disposed. It is also worth adding that the number of outer slots 5 and inner slots 7 is smaller than in the previous embodiment and in the present embodiment amounts to forty.

Importantly, in the present embodiment the outer bars 6 forming the outer cage are made of tin bronze (for example CuSn4) or aluminium bronze (for example CuAl5) having an electrical conductivity σₑₓₜ of 10 MS/m, while the inner bars 8 forming the inner cage are made of copper having an electrical conductivity σᵢₙₜ of 58 MS/m. Consequently, the ratio of the electrical conductivity σ of the material of the outer bars 6 to the conductivity of the material of the inner bars 8 is approx. 0.172.

### Example 3

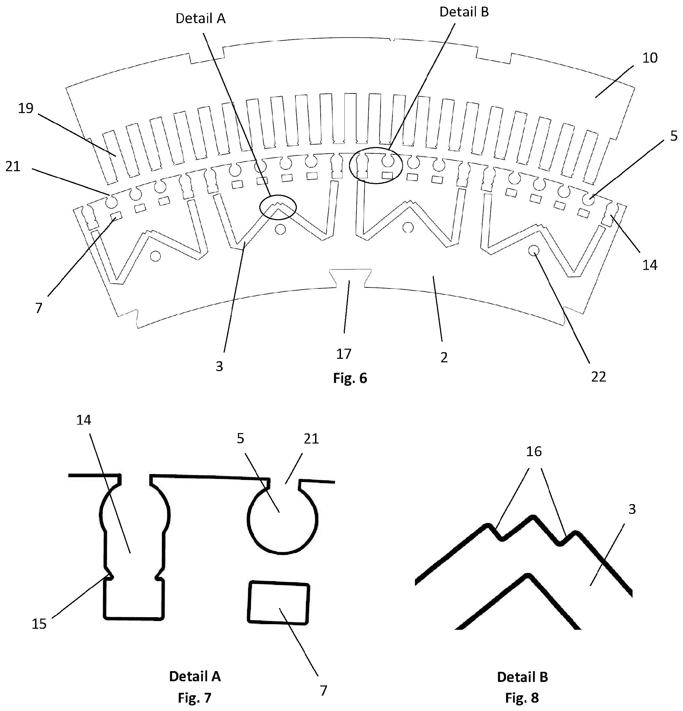

The third embodiment of the rotor 1 and of the electric synchronous motor with permanent magnets comprising such a rotor 1 is illustrated in a front cross-sectional view in Fig. 5, in a front view in Fig. 6 showing a stator 10 segment and a rotor body 2 segment, together with enlarged details A and B shown in Fig. 7 and Fig. 8, respectively.

The rotor 1 and the electric synchronous motor with permanent magnets comprising it has a construction similar to the construction of the rotor 1 and the electric synchronous motor with permanent magnets presented in the first embodiment, and therefore similar constituent elements will not be described again for the sake of clarity of the present disclosure.

Unlike in the first embodiment of the invention, in the third embodiment the rotor 1 and the electric synchronous motor with permanent magnets takes the form of a thirty-two-pole construction. Due to the relatively large external dimension of the motor components, the rotor body 2 laminations and the stator 10 laminations have been divided into segments, wherein Fig. 6 illustrates single segments of each of the laminations. In the present embodiment of the invention, each segment of the rotor body 2 constitutes an annular sector of an angle corresponding to four pole pitches, i.e. encompassing four adjacent receiving channels 3. Consequently, the rotor body 2 segment is formed by an annular sector of 45°. Analogously to the first embodiment of the invention, adjacent receiving channels 3 have a different geometry of segments, i.e. the angle between the segments differs in both adjacent receiving channels 3. As a result, in the pole pitch between the outer segments of the receiving channel 3 for the narrower letter W, five outer slots 5 and five inner slots 7 are disposed in the circumferential area of the rotor body 2 lamination, whereas in the pole pitch between the outer segments of the receiving channel 3 for the wider letter W, six outer slots 5 and six inner slots 7 are disposed in the circumferential area of the rotor body 2 lamination. This construction is repeated in an alternating arrangement across the entire circumference of the rotor 1 according to the present invention. In the present embodiment, the electric synchronous motor with permanent magnets has been designed so that the circumference of the rotor body 2 contains one hundred and seventy-six outer slots 5 disposed at equal angular spacing. In turn, the number of stator slots 19 is one hundred and ninety-eight, and therefore in the present embodiment the slot pitch ratio of the rotor 1 to the stator 10 is approx. 0.889. It is worth noting that the stator 10 lamination has been divided into nine segments, wherein each segment encompasses an annular sector of 40°.

Unlike in the first embodiment, in the rotor body 2 according to the present embodiment of the invention, the outer slots 5 are connected to the corresponding inner slots 7 by means of a slot channel 14 only at the extreme positions relative to the pole pitch. As best illustrated in the enlargement of detail A in Fig. 7, the width of the slot channel 14 is equal to the width of the inner slot 7, wherein two locking projections 15 are located in the region of connection of the slot channel 14 with the inner slot 7, the function of which is to maintain the inner bars 8 of the inner cage in the position inside the inner slot 7, even in situations where a significant centrifugal force acts on the inner bars 8.

Additionally, as best illustrated in the enlargement of detail B in Fig. 8, the receiving channel 3 in the region of connection of the middle segments has abutment surfaces 16 formed, which are perpendicular to the longitudinal direction of the corresponding permanent magnet 4. The abutment surfaces 16 aim to increase the contact area between the permanent magnet 4 and the rotor body 2, particularly in the corner area, which is susceptible to high loads caused, among other things, by centrifugal force as well as vibrations of the motor itself. Permanent magnets 4 are made of brittle materials, and therefore the use of abutment surfaces 16 in the corner area of the permanent magnet 4 allows for a reduction in the risk of its chipping, and thereby the reliability of the electric synchronous motor with permanent magnets according to the present invention is increased. Most preferably, for achieving the desired effect, the length of the abutment surface 16 is greater than ¼ of the length of the shorter side of the permanent magnet 4.

Furthermore, due to the significant torques being transmitted, the rotor body 2 is mounted to the support structure 24 by means of a form-fit connection, wherein in Figs. 5 and 6 the form-fit connection recesses 17 are shown, assuming the form of a dovetail.

Importantly, in the present embodiment the outer bars 6 forming the outer cage are made of brass M63 having an electrical conductivity σₑₓₜ of 15 MS/m, while the inner bars 8 forming the inner cage are made of copper having an electrical conductivity σᵢₙₜ of 58 MS/m. Consequently, the ratio of the electrical conductivity σ of the material of the outer bars 6 to the conductivity of the material of the inner bars 8 is approx. 0.259.

### List of reference numerals:

**1- rotor**
**2** - rotor body
**3** - receiving channel
**4 -** permanent magnet
**5** - outer slot
**6** - outer bar
**7 -** inner slot
**8 -** inner bar
**9** - end ring
**10** - stator
**11** - stator winding
**12** - shaft
**13** - bearing
**14** - slot channel
**15** - locking projection
**16** - abutment surface
**17** - form-fit connection recess
**18** - housing
**19** - stator slot
**20** - locking element
**21 -** outer opening
**22** - guide hole
**23** - fastening pin
**24** - support structure

## Claims

1. A rotor (1) of an electric synchronous motor with permanent magnets, comprising:
a substantially cylindrical rotor body (2) in which at least two receiving channels (3) are formed, in which at least two permanent magnets (4) are disposed,
wherein the rotor body (2) has, in the region of the outer surface, a plurality of circumferentially disposed outer slots (5) in which outer bars (6) are inserted, and, in the region closer to the rotational axis of the substantially cylindrical rotor body (2), a plurality of circumferentially disposed inner slots (7) in which inner bars (8) are inserted,
end rings (9) which electrically connect the outer bars (6) and/or the inner bars (8), forming an outer cage and an inner cage respectively,
**characterized in that**
the ratio of the electrical conductivity σₑₓₜ of the material of the outer bars (6) to the electrical conductivity σᵢₙₜ of the material of the inner bars (8) falls within the range of 0.17 to 0.35.

2. The rotor (1) of an electric synchronous motor with permanent magnets according to claim 1, **characterized in that** the rotor body (2) is formed from a plurality of rotor body (2) laminations assembled together to form a stack comprising a lamination stack of rotor body (2) laminations.

3. The rotor (1) of an electric synchronous motor with permanent magnets according to claim 2, **characterized in that** the rotor body (2) lamination is formed from segments constituting an annular sector, preferably having an angle corresponding to the pole pitch or a multiple thereof.

4. The rotor (1) of an electric synchronous motor with permanent magnets according to any of claims 1 to 3, **characterized in that** the receiving channel (3) is formed from at least two segments and assumes an expanded structure.

5. The rotor (1) of an electric synchronous motor with permanent magnets according to claim 4, **characterized in that** the receiving channel (3) is formed from four segments and assumes a W-shaped structure, with one permanent magnet (4) being placed in each segment.

6. The rotor (1) of an electric synchronous motor with permanent magnets according to claim 5, **characterized in that** the outer segments of the receiving channel (3) extend substantially in the radial direction, and their outer ends are located in the region adjacent to the inner slots (7) at the extreme positions for the given pole pitch.

7. The rotor (1) of an electric synchronous motor with permanent magnets according to claim 5 or 6, **characterized in that** the receiving channels (3) for adjacent poles have different opening angles between adjacent segments forming the receiving channels (3).

8. The rotor (1) of an electric synchronous motor with permanent magnets according to claim 7, **characterized in that** adjacent poles have a different number of outer slots (5) and/or inner slots (7), preferably differing by one, two or three.

9. The rotor (1) of an electric synchronous motor with permanent magnets according to any of claims 4 to 8, **characterized in that** the receiving channel (3) in the region of connection of the middle segments has abutment surfaces (16) formed, perpendicular to the longitudinal direction of the corresponding permanent magnet (4), preferably having a length greater than ¼ of the length of the shorter side of the permanent magnet (4).

10. The rotor (1) of an electric synchronous motor with permanent magnets according to any of claims 1 to 9, **characterized in that** at least the extreme outer slots (5) and inner slots (7) for each pole pitch are connected to each other by means of a slot channel (14).

11. The rotor (1) of an electric synchronous motor with permanent magnets according to claim 10, **characterized in that** all outer slots (5) and inner slots (7) for each pole pitch are connected to each other by means of a slot channel (14), wherein the width of the slot channel (14) at the extreme positions of each pole pitch is greater than the width of the slot channels (14) at the remaining positions.

12. The rotor (1) of an electric synchronous motor with permanent magnets according to claim 10, **characterized in that** the width of the slot channel (14) is substantially equal to the dimension corresponding to the width of the inner slot (7), wherein at least one locking projection (15) is located in the region of connection of the slot channel (14) with the inner slot (7).

13. The rotor (1) of an electric synchronous motor with permanent magnets according to any of claims 1 to 12, **characterized in that** the outer slots (5) are open to the outer surface of the rotor body (2) by means of an outer opening (21), wherein the outer opening (21) has a width smaller than the width dimension of the outer slot (5).

14. The rotor (1) of an electric synchronous motor with permanent magnets according to any of claims 1 to 13, **characterized in that** the outer bars (6) and/or the inner bars (8) are made from a group of materials comprising copper and its alloys, brass, bronze, with various additions comprising zinc, lead, aluminium, nickel, iron, silicon, tin, beryllium.

15. An electric synchronous motor with permanent magnets comprising a housing (18) in which a stator (10) is placed, inside which a rotor is placed in a manner ensuring free rotational movement about its axis, wherein the stator (10) has, on its inner circumference, a plurality of stator slots (19) open to the inner surface of the stator (10), in which a stator winding (11) is placed, **characterized in that** the rotor is a rotor (1) as defined in any of claims 1 to 14.
